# EUROPÄISCHE PATENTSCHRIFT

(11) **EP 1 971 443 B1**
(45) Veröffentlichungstag und Bekanntmachung des Hinweises auf die Patenterteilung: **01.05.2013**
(21) Anmeldenummer: 06830660.4
(22) Anmeldetag: 15.12.2006
(51) Int. Cl.: B05B 7/04, C23C 24/04, F01D 5/28

(54) **DÜSENANORDNUNG UND VERFAHREN ZUM KALTGASSPRITZEN**
NOZZLE ARRANGEMENT AND METHOD FOR COLD GAS SPRAYING
ENSEMBLE DE BUSES ET PROCÉDÉ DE PROJECTION PAR GAZ FROID

(30) Priorität: 10.01.2006 EP 06000402
(43) Veröffentlichungstag der Anmeldung: 24.09.2008
(73) Patentinhaber: Siemens Aktiengesellschaft, 80333 München (DE)
(72) Erfinder: JABADO, Rene, 14199 Berlin (DE); JENSEN, Jens Dahl, 14050 Berlin (DE); KRÜGER, Ursus, 14089 Berlin (DE); KÖRTVELYESSY, Daniel, 13469 Berlin (DE); LÜTHEN, Volkmar, 12157 Berlin (DE); REICHE, Ralph, 13465 Berlin (DE); RINDLER, Michael, 15566 Schöneiche (DE); ULLRICH, Raymond, 14621 Schönwalde (DE)
(86) Internationale Anmeldenummer: PCT/EP2006/069769
(87) Internationale Veröffentlichungsnummer: WO 2007/080042

(56) Entgegenhaltungen:
- WO-A-2005/079209
- DE-A1- 10 126 100

## Beschreibung

Die vorliegende Erfindung betrifft eine Düsenanordnung und ein Verfahren zur Herstellung einer Beschichtung auf einer Oberfläche eines Substrats mittels Kaltgasspritzen sowie durch die Düsenanordnung und das Verfahren hergestellte Beschichtungen.

Es ist bekannt, dass beim Kaltgasspritzverfahren (ColdSpray™, "Kinetic Gas Spray", siehe WO 2005/079209, DE 69016433 T2, EP 0 484 533 A1, US 5 302 414 A1, US 2004/037954, EP 0 924 315 B1, EP 1 132 497 A1, US 6 502 767 B2) für Beschichtungszwecke, die zum Einsatz kommenden pulverförmigen Werkstoffe Partikelgrößen von > 5 µm, idealerweise 20 bis 40 µm, aufweisen müssen. Aus kinetisch-energetischen Gründen ist das direkte Verspritzen nanopartikulärer Werkstoffe, um direkt nanostrukturierte oder Dünnschicht-Coatings (< 1 µm) zu erzielen, nicht möglich. Partikel mit Größen < 5 µm werden nicht in die Schichten eingebaut, sondern werden schon vor dem Aufprall auf das Substrat durch den sich vor dem Substrat ausbildenden Staudruck bevorzugt seitlich abgelenkt. Weiterhin ist bekannt, dass beim Kaltgasspritzverfahren kontinuierlich beschleunigte Trägergasströme im Überschallbereich eingeschränkt bis 2000 m/s genutzt werden.

US 6 124 563 A1 und US 6 630 207 B1 beschreiben gepulste thermische Sprühverfahren (pulsed HVOF, pulsed Railgun, pulsed elektrothermische & Plasma-Sprühverfahren), mit denen Partikelgeschwindigkeiten >> 2000 m/s erreicht werden können. Dadurch können verbesserte Schichteigenschaften und Schichtsysteme erzeugt werden, die bislang aufgrund zu niedriger Partikelgeschwindigkeiten nicht realisierbar waren.

DE 103 19 481 A1 und WO 03/041868 A2 beschreiben spezielle Düsenkonstruktionen für Kaltgasspritzverfahren. EP 1 132 497 A1 beschreibt entfernt die Wirkung einer pulsierenden Partikeldosierung.

Aufgabe der vorliegenden Erfindung ist es eine Vorrichtung zum Kaltspritzen derart zu verbessern, dass durch ihre Verwendung neue Schichtsysteme möglich werden und Beschichtungen mit verbesserten Schichteigenschaften erzeugt werden können.

Erfindungsgemäß wird diese Aufgabe durch die Düsenanordnung gemäß Anspruch 1 gelöst.

Eine weitere Aufgabe der vorliegenden Erfindung ist es, ein Verfahren anzugeben, mit dem neue Schichtsysteme sowie Beschichtungen mit verbesserten Schichteigenschaften hergestellt werden können.

Diese Aufgabe wird erfindungsgemäß durch ein Verfahren gemäß Anspruch 14 gelöst.

Eine weitere Aufgabe der vorliegenden Erfindung ist es, eine gegenüber dem Stand der Technik verbesserte Beschichtung auf einem Substrat zur Verfügung zu stellen.

Diese Aufgabe wird erfindungsgemäß durch eine Beschichtung gemäß Anspruch 22 gelöst.

Die erfindungsgemäße Düsenanordnung weist eine erste Düse und eine zweite Düse auf, welche innerhalb der ersten Düse angeordnet ist und ist damit als 2-Wege-Düse ausgeführt. Der durch die erste Düse erzeugte Gasstrom hüllt den durch die zweite Düse erzeugten Gasstrom ein, sodass in dem eingehüllten Gasstrom enthaltene Partikel nicht nach außen abgelenkt werden können. Um eine Ablenkung in jedweder Richtung zu verhindern, ist die zweite Düse in der ersten Düse vorzugsweise zentriert angeordnet.

Die erfindungsgemäße Anordnung von zwei Düsen hat den Vorteil, dass der durch die erste Düse erzeugte Gasstrom eine Einhüllende für den Gastrom bildet, der von der zweiten Düse erzeugt wird. Die Partikel, die in dem Gas enthalten sind, das der zweiten Düse zugeführt wird, weisen Partikelgrößen von < 50 µm, auf, die eingesetzte Partikelgröße ist bevorzugt < 5 µm, noch bevorzugter < 1 µm. Durch die Bildung einer Einhüllenden wird verhindert, dass Partikel mit einer Partikelgröße < 5 µm, insbesondere < 1 µm, durch den Staudruck vor dem zu beschichtenden Substrat nach außen abgelenkt werden, sodass durch die erfindungsgemäße Vorrichtung gezielt Partikel kleinerer Partikelgröße in kaltgespritzte Schichten eingebaut werden können. Die erfindungsgemäße Düsenanordnung ermöglicht daher die Herstellung von Beschichtungen mit Nanopartikeln. Als Nanopartikel werden im Sinne der vorliegenden Erfindung Partikel mit einer Partikelgröße < 5 µm, insbesondere 1 µm, bezeichnet.

Die erste Düse ist in einer bevorzugten Ausführungsform eine zylinderförmige Düse.

Bei der zweiten Düse handelt es sich in einer bevorzugten Ausführungsform um eine Düse, die einen konvergenten und einen divergenten Abschnitt aufweist, noch bevorzugter um eine Lavaldüse. Üblicherweise hat eine Lavaldüse die Form eines Doppelkegels und ein Expansionverhältnis (Verhältnis des Austrittsquerschnitts zum engsten Querschnitt) von 6 bis 9.

Der Querschnitt der zweiten Düse kann jede denkbare Form aufweisen, bevorzugt wird jedoch eine Düse mit einem rechtwinkeliegen, parallelepipeden, elliptischen oder kreisförmigen Querschnitt eingesetzt. Die Gestalt des Querschnitts der zweiten Düse kann jedoch auch entlang ihrer Länge variieren, sodass auch Kombinationen der vorstehenden Querschnittsformen eingesetzt werden. In dieser Ausführungsform sind der Innen- und Außenquerschnitt der zweiten Düse gleich gestaltet, d. h. Der Außendurchmesser der zweiten Düse hängt in einer konstanten Funktion von dem Innendurchmesser der zweiten Düse ab.

In einer weiteren Ausführungsform muss bei dem Querschnitt der zweiten Düse zwischen dem Innenquerschnitt und dem Außenquerschnitt der Düse unterschieden werden, weil in dieser Ausführungsform der Innenquerschnitt anders gestaltet ist als der Außenquerschnitt der zweiten Düse. Der Innenquerschnitt und der Außenquerschnitt der zweiten Düse weisen die vorstehend beschriebenen Formen auf. Die Form des Innenquerschnitts ist jedoch zu der Form des Außenquerschnitts verschieden. Beispielsweise ist der Innenquerschnitt rechteckig, während der Außenquerschnitt kreisförmig ist.

Die erste Düse kann einen konstanten oder variierenden Innendurchmesser aufweisen. Beispielsweise ist die erste Düse als Expansionsdüse ausgestaltet. Die erste Düse kann aber auch einen konvergierenden Abschnitt aufweisen. In einer weiteren Ausgestaltung weist die erste Düse einen konvergenten und einen divergenten Abschnitt auf. Bevorzugt ist der Innendurchmesser der ersten Düse konstant, und die Düse ist zylinderförmig ausgestaltet Der Innendurchmesser der ersten Düse liegt zwischen 3 bis 50 mm², bevorzugt 5 bis 30 mm², noch bevorzugter 7 bis 20 mm².

Die Größe der zweiten Düse ist an den Innendurchmesser der ersten Düse derart angepasst, dass der Abstand des Außenquerschnitts der zweiten Düse zu dem Innendurchmesser der ersten Düse mindestens 1 mm, bevorzugt zwischen 2 mm und 10 mm, beträgt.

Die Gesamtlänge der ersten Düse liegt zwischen 60 und 300 mm, bevorzugt zwischen 100 und 200 mm. Die Gesamtlänge der zweiten Düse ist zwischen 60 und 300 mm, vorzugsweise zwischen 100 und 200 mm. Die Gesamtlänge der ersten Düse ist in einer bevorzugten Ausführungsform der Erfindung gleich zu der Gesamtlänge der zweiten Düse. In einer weiteren Ausführungsform der Erfindung ist die Gesamtlänge der ersten Düse größer als die Gesamtlänge der zweiten Düse. In einer weiteren Ausführungsform der Erfindung ist die Gesamtlänge der ersten Düse kleiner als die Gesamtlänge der zweiten Düse.

Sowohl die erste Düse als auch die zweite Düse können aus einer Keramik, einem Kunststoff, einem Metall oder einer Metalllegierung etc., die jeweils beschichtet sein können, bestehen. Die Wahl des Düsenmaterials richtet sich nach den eingesetzten Gasen und Partikeln. Die Düsen sind vorteilhafterweise aus mindestens zwei Teilen gefertigt.

Zur Beschichtung eines Substrats mittel eines Kaltgasspritzverfahrens wird der ersten Düse ein Gas zugeführt, und der zweiten Düse ein Partikel enthaltendes Gas zugeführt. Die Partikel werden auf die Oberfläche des Substrats mittels der Gase aufgebracht.

Als Partikel können alle bekannten Spritzmaterialien, beispielsweise Keramiken, Metalle, Metalllegierungen, Verbundwerkstoffe oder Kunststoffe eingesetzt werden.

Die Partikel können, müssen aber nicht, eine einheitliche Partikelgröße aufweisen. Die Partikelgröße kann bis zu 50 µm betragen. Das jeweilige Gas ist komprimiert und wird in der Düse entspannt, sodass das Gas auf Ultraschallgeschwindigkeit beschleunigt wird. Das jeweilige Gas kann eine Temperatur von 30 bis zu 1000 °C, bevorzugt 100 bis 800 °C, aufweisen und ist bevorzugt Stickstoff, Helium, Argon, Luft, Neon, Krypton, Xenon, Sauerstoff, Kohlendioxid oder deren Gemische. Mit derartigen Gasen können die hohen Geschwindigkeiten, die zum Kaltspritzen erforderlich sind, erreicht werden.

Das Gas, das zur Zuführung zu der ersten Düse ausgewählt ist, kann das gleiche Gas sein, das zur Zuführung zu der zweiten Düse ausgewählt ist. Es können jedoch für die beiden Düsen verschiedene Gase ausgewählt werden.

Die Gasgeschwindigkeiten können frei gewählt und eingestellt werden. Das Gas bzw. das Gas-Partikel-Gemisch wird in der jeweiligen Düse entspannt, wodurch Gasgeschwindigkeiten von bis zu 3000 m/s und gegebenenfalls Partikelgeschwindigkeiten von bis zu 2000 m/s erreicht werden können.

In einer Ausführungsform enthält das Gas, das der ersten Düse zugeführt wird, keine Partikel, während das Gas, das der zweiten Düse zugeführt wird, Partikel enthält. Diese Ausführungsform ist besonders geeignet, um Partikel mit einer Partikelgröße < 5 µm, insbesondere < 1 µm, in kaltgespritzte Schichten einzubauen. Der aus der ersten Düse kommende Gasstrom bildet eine Einhüllende für das Partikel enthaltende Gas und verhindert, dass die Partikel durch den Staudruck vor dem Substrat abgelenkt werden.

In einer weiteren Ausführungsform enthält das Gas, das der ersten Düse zugeführt wird, Partikel, die bevorzugt eine Partikelgröße von 5 bis 50 µm, aufweisen. Das Gas, das der zweiten Düse zugeführt wird, weist Partikel mit einer Partikelgröße < 50 µm, bevorzugt < 5 µm, noch bevorzugter < 1 µm auf.

Die Geschwindigkeit eines Partikels hängt von seiner Größe und physikalischen Dichte sowie der Art des eingesetzten Gases und von den Zustandsgrößen dieses Gases ab. Durch die Variation der eingesetzten Partikel sowie der eingesetzten Gase können gradierte, Multilagen- oder in der Zusammensetzung variierende Schichten hergestellt werden. Durch Wahl einer Partikelgröße < 1 µm können nanostrukturierte Beschichtungen erzeugt werden.

Durch Variation der Relativgeschwindigkeiten der beiden Gasströme können an der Grenzfläche gezielt Wirbel erzeugt werden, die die effektive Durchmischung der in den Gasströmen enthaltenden Partikel bewirken. Dadurch sind insbesondere gradierte Beschichtungen einfach herzustellen.

Beschichtungen, die unter Verwendung der vorstehend beschriebenen Düsenanordnung und des vorstehend beschriebenen Verfahrens hergestellt werden, weisen gegenüber dem Stand der Technik verbesserte Schichteigenschaften auf. Die durch die erfindungsgemäße Düsenanordnung hergestellten Schichten haften sehr gut auf Substraten, beispielsweise auf Keramik, Metall, Metalllegierungen, Kunststoffen, Glas oder Verbundwerkstoffen, sind porenfrei und besitzen eine glatte Oberfläche, sodass eine Nachbearbeitung der hergestellten Schichten nicht notwendig ist. Die erfindungsgemäßen Beschichtungen weisen eine hohe Härte auf.

Insbesondere können durch die vorstehende Düsenanordnung und das vorstehende Verfahren Beschichtungen mit Partikeln mit einer Partikelgröße < 5 µm, insbesondere < 1 µm, hergestellt werden. Dadurch lassen sich Schichten mit geringer Dicke erzeugen.

Die Erfindung wird im Folgenden näher erläutert. Die folgenden Beispiele und Ausführungsformen schränken die vorliegende Erfindung nicht ein.
- Figur 1: zeigt eine Seitenansicht einer erfindungsgemäßen Düsenanordnung.
- Fig. 2a,2b,2c: sind Querschnittsansichten der erfindungsgemäßen Düsenanordnung gemäß Figur 1 an verschiedenen Stellen der Düsenanordnung.
- Figur 3: zeigt eine Seitenansicht einer weiteren erfindungsgemäßen Düsenanordnung.
- Fig. 4a,4b,4c: sind Querschnittsansichten der erfindungsgemäßen Düsenanordnung gemäß Figur 3 an verschiedenen Stellen der Düsenanordnung.
- Figur 5: zeigt eine Seitenansicht einer weiteren erfindungsgemäßen Düsenanordnung.
- Fig. 6a,6b,6c: sind Querschnittsansichten der erfindungsgemäßen Düsenanordnung gemäß Figur 5 an verschiedenen Stellen der Düsenanordnung.
- Figur 7: zeigt beispielhaft eine Gasturbine in einem Längsteilschnitt.
- Figur 8: zeigt in perspektivischer Ansicht eine Laufschaufel oder Leitschaufel einer Strömungsmaschine.
- Figur 9: zeigt eine Brennkammer einer Gasturbine.

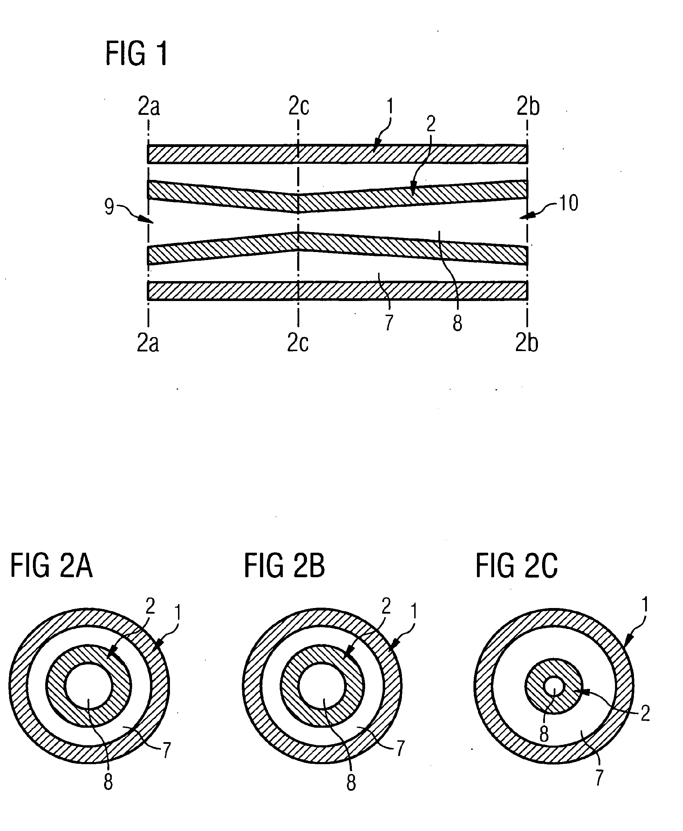

In Figur 1 ist eine Ausführungsform der erfindungsgemäßen Düsenanordnung für eine Kaltspritzgasvorrichtung in einer schematischen Darstellung gezeigt. Die Düsenanordnung der ersten Ausführungsform umfasst eine erste, zylindrische Düse 1 und eine zweite, im Inneren der zylindrischen Düse 1 angeordnete zweite Düse 2. Bei der zylinderförmigen Düse 1 weist nicht nur die Außenfläche sondern auch in Innenfläche die Form eines Zylindermantels auf, so dass sie sowohl einen konstanten Innendurchmesser als auch einen konstanten Außendurchmesser besitzt. Die zweite Düse 2, die nachfolgend innere Düse genannt wird, ist im Unterschied zur zylindrischen Düse als Lavaldüse mit einem konvergenten und einen divergenten Abschnitt ausgestaltet. Zwischen der Innenfläche der zylinderförmigen Düse 1 und der Außenfläche der inneren Düse 2 ist daher ein äußerer Strömungskanal 7 mit variablem Strömungsquerschnitt vorhanden, der ein wenig außerhalb der axialen Mitte der Düsenanordnung den größten Strömungsquerschnitt aufweist. Die Innenfläche der inneren Düse 2 begrenzt dagegen einen inneren Strömungskanal 8, der dort, wo der äußere Strömungskanal 7 seinen größten Querschnitt aufweist, seinen geringsten Querschnitt besitzt, also eine Engstelle aufweist.

Figur 2a zeigt die Querschnitte der in Figur 1 dargestellten zylinderförmigen Düse 1 sowie der inneren Düse 2 am Gaseintrittsende 9, wohingegen Figur 2b die Querschnitte der zylinderförmigen Düse 1 sowie der inneren Düse 2 am Gasaustrittsende 10 zeigt. Figur 2c zeigt den Querschnitt der Düsenanordnung im Bereich der Engstelle des inneren Strömungskanal 8. Alle Querschnitte weisen eine kreisförmige Gestalt auf.

Die in Fig. 1, 2a und 2b gezeigte Düsenanordnung eignet sich insbesondere zur Durchführung des erfindungsgemäßen Verfahrens, bei dem das Gas, das der zylinderförmigen Düse 1 zugeführt wird, Partikel mit einer Partikelgröße enthält, die im wesentlichen zwischen 5 und 20 µm, liegt, und das Gas, das der inneren Düse 2 zugeführt wird, Partikel mit einer Partikelgröße enthält, die im wesentlichen < 5 µm, sind.

In einem erfindungsgemäßen Verfahren wird zum Kaltverspritzen bspw. der zylinderförmigen Düse 1, also dem äußeren Strömungskanal 7, ein Gemisch aus Kupferpartikeln und komprimierter Stickstoff zugeführt und entspannt, während der inneren Düse 2, also dem inneren Strömungskanal 8, ein Gemisch aus Aluminiumpulver und komprimierter Luft zugeführt und entspannt wird. Durch die Entspannung der Gase werden die Gase und Partikel beschleunigt und so die Kupfer- und Aluminiumpartikel auf ein Stahlsubstrat aufgebracht. Auf diese Weise wird eine nanostrukturierte Beschichtung erhalten, die sehr gute Hafteigenschaften aufweist, glatt und porenfrei ist.

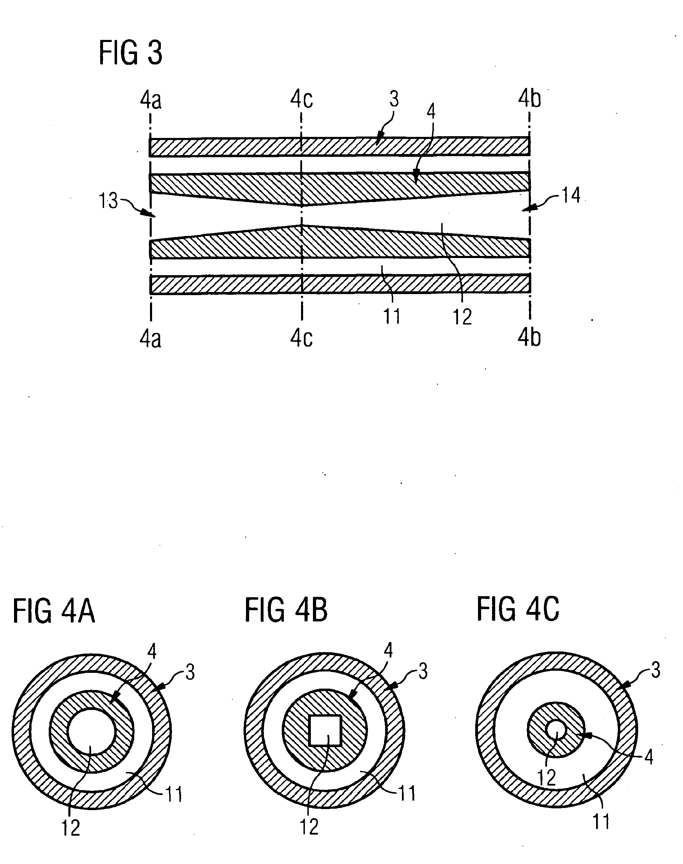

In Figur 3 ist eine weitere Ausführungsform der erfindungsgemäßen Düsenanordnung in einer schematischen Darstellung gezeigt. Die erste Düse 3 ist eine zylinderförmige Düse, welche die zweite Düse 4, nachfolgend innere Düse genannt, umgibt. Die zylinderförmige Düse 3 weist einen konstanten Innen- und Außendurchmesser auf und entspricht in ihrer Gestaltung der zylinderförmigen Düse 1 der ersten Ausführungsform. Die innere Düse 4 ist wiederum eine Lavaldüse, die einen Innenquerschnitt mit einem konvergenten und divergenten Abschnitt und einen Außenquerschnitt mit einem konstanten Durchmesser aufweist.

Zwischen der innern Düse 4 und der zylinderförmigen Düse 3 ist ein ringförmiger äußerer Strömungskanal 11 gebildet, der entlang der Axialrichtung der Düsenanordnung einen konstanten Strömungsquerschnitt besitzt. Der von der Innenfläche der Lavaldüse 4 begrenzte innere Strömungskanal 12 weist am Gaseintrittsende 13 der Düsenanordnung einen runden Strömungsquerschnitt auf, wohingegen er am Gasaustrittsende 14 der Düsenanordnung einen rechteckigen Querschnitt aufweist. Zwischen dem Gaseintrittsende 13 und dem Gasaustrittsende 14 weist der innere Strömungskanal 12 eine Engstelle auf, in deren Bereich im vorliegenden Ausführungsbeispiel ein fließender Übergang vom runden zum rechtwinkligen Querschnitt erfolgt.

Figur 4a zeigt die Querschnitte der in Figur 3 dargestellten zylinderförmigen Düse 3 und der inneren Düse 4 am Gaseintrittsende 13. Die Innen- und Außenquerschnitte am Gaseintrittsende 13 weisen eine kreisförmige Gestalt auf.

Figur 4b zeigt die Querschnitte der zylinderförmigen Düse 3 und der inneren Düse 4 am Gasaustrittsende 14. Innen- und Außenquerschnitt der zylinderförmigen Düse 3 sind kreisförmig. Der Außenquerschnitt der inneren Düse 4 ist ebenfalls kreisförmig, während der Innenquerschnitt der inneren Düse 4 rechtwinkelig ist.

Figur 4c zeigt die Querschnitte der zylinderförmigen Düse 3 und der inneren Düse 4 im Bereich der Engstelle des inneren Strömungskanals 12, wo der Übergang vom runden zum rechtwinkligen Querschnitt erfolgt.

Die in Fig. 3, 4a und 4b gezeigte Düsenanordnung eignet sich insbesondere zur Durchführung des erfindungsgemäßen Verfahrens, bei dem das Gas, das der zylinderförmigen Düse 3 zugeführt wird, Partikel mit einer Partikelgröße enthält, die im wesentlichen zwischen 20 und 40 µm, liegt, und das Gas, das der inneren Düse 4 zugeführt wird, Partikel mit einer Partikelgröße enthält, die im wesentlichen < 5 µm, insbesondere < 1 µm, ist.

In einem erfindungsgemäßen Verfahren wird zum Kaltverspritzen bspw. der zylinderförmigen Düse 3 ein Gemisch aus einer Kupfer-Aluminiumlegierung und komprimierter Luft zugeführt und entspannt, während der inneren Düse 4 ein Gemisch aus Aluminiumpulver und komprimierter Luft zugeführt und entspannt wird. Durch die Entspannung der Gase werden Gase und Partikel beschleunigt. Auf diese Weise werden die Kupfer-Aluminiumlegierung und die Aluminiumpartikel auf ein Stahlsubstrat aufgebracht. Die auf dem Substrat erhaltene Schicht ist gradiert, haftfest, glatt und porenfrei.

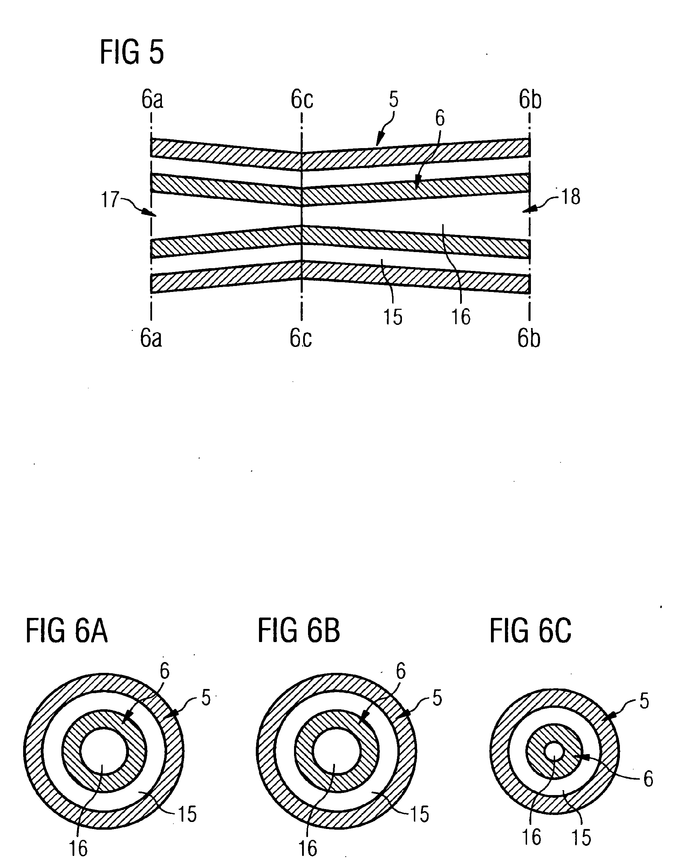

In Figur 5 ist eine noch weitere Ausführungsform der erfindungsgemäßen Düsenanordnung gezeigt. Diese umfasst eine erste, äußere Düse 5, die nicht zylinderförmig ausgestaltet ist und die eine zweite Düse 6, nachfolgend innere Düse genannt, umgibt. Die äußere Düse 5 und die innere Düse 6 weisen jeweils einen konvergenten und einen divergenten Abschnitt auf, wobei die Außenkontur der inneren Düse 6 an die Innenkontur Kontur der äußeren Düse 5 angepasst ist. Die Ausgestaltung der inneren Düse 6 entspricht der Ausgestaltung der inneren Düse 1 der ersten Ausführungsform.

In der vorliegenden Ausführungsform ist der Abstand der Außenfläche der inneren Düse 6 von der Innenfläche der äußeren Düse 5 konstant, so dass der zwischen der inneren Düse 6 und der äußeren Düse 5 gebildete äußere Strömungskanal 15 entlang der Axialrichtung der Düsenanordnung eine konstante Querschnittsfläche besitzt. Der von der Innenfläche der inneren Düse 6 begrenzte innere Strömungskanal 16 weist dagegen wie der innere Strömungskanal 8 der ersten Ausführungsform eine Engstelle auf.

In Fig. 6a sind die Querschnitte der in Fig. 5 dargestellten äußeren Düse 5 sowie der inneren Düse 6 am Gaseintrittsende 17 der Düsenanordnung gezeigt. Alle Querschnitte sind kreisförmig. In Fig. 6b sind die Querschnitte der äußeren Düse sowie der inneren Düse 6 am Gasaustrittsende 18 der Düsenanordnung gezeigt. Alle Querschnitte sind kreisförmig. Figur 6c zeigt den Querschnitt der Düsenanordnung im Bereich der Engstelle des inneren Strömungskanals 8.

Die in Fig. 5, 6a und 6b gezeigte Düsenanordnung eignet sich insbesondere zur Durchführung des erfindungsgemäßen Verfahrens, bei dem das Gas, das der äußeren Düse 5 zugeführt wird, keine Partikel enthält und das Gas, das der inneren Düse 6 zugeführt wird, Partikel mit einer Partikelgröße enthält, die im wesentlichen < 5 µm, insbesondere < 1 µm, sind, weil bei dieser Ausführungsform der Gasstrom aus der ersten Düse 5 den Gasstrom aus der zweiten Düse 6 von allen Seiten her gleichmäßig einhüllt.

In einem erfindungsgemäßen Verfahren wird zum Kaltverspritzen bspw. der äußeren Düse 5 komprimierter Stickstoff zugeführt und entspannt, während der inneren Düse 6 ein Gemisch aus Aluminiumpulver mit einer Partikelgröße < 5 µm, insbesondere < 1 µm, und komprimierter Luft zugeführt und entspannt wird. Durch die Entspannung der Gase werden Gase und Partikel beschleunigt. Auf diese Weise werden die Aluminiumpartikel auf ein Stahlsubstrat aufgebracht und eine haftfeste, glatte Beschichtung aus Nanopartikeln erzeugt. Die Beschichtung weist eine geringe Dicke auf und ist porenfrei.

Die mit Bezug auf die verschiedenen Ausführungsformen beschriebenen Verfahren zum Kaltgasspritzen stellen lediglich Beispiele für mögliche Anwendungen der jeweiligen Düsenanordnung dar. Die jeweils beschriebenen Verfahren können jedoch grundsätzlich auch mit den anderen Ausführungsformen der Düsenanordnung verwirklicht werden.

Das Erfindungsgemäße Verfahren und die erfindungsgemäße Düsenanordnung können insbesondere zum Herstellen von Beschichtungen auf Turbinenbauteilen wie etwa Turbinenschaufeln, insbesondere Gasturbinenschaufeln Verwendung finden. Nachfolgend wird daher ein Überblick über eine Gasturbinenanlage gegeben.

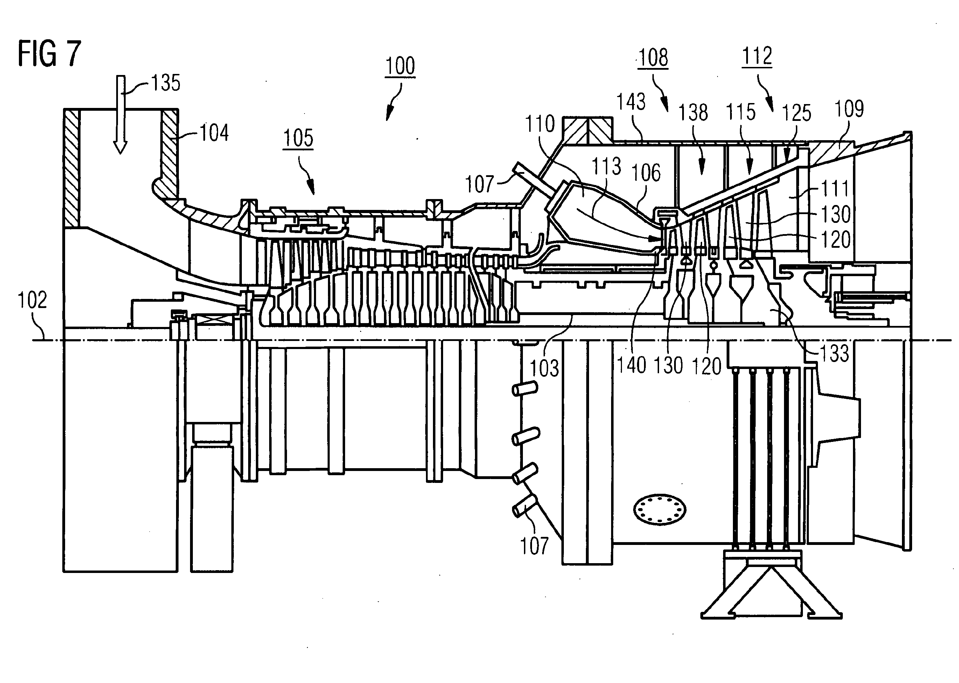

Die Figur 7 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

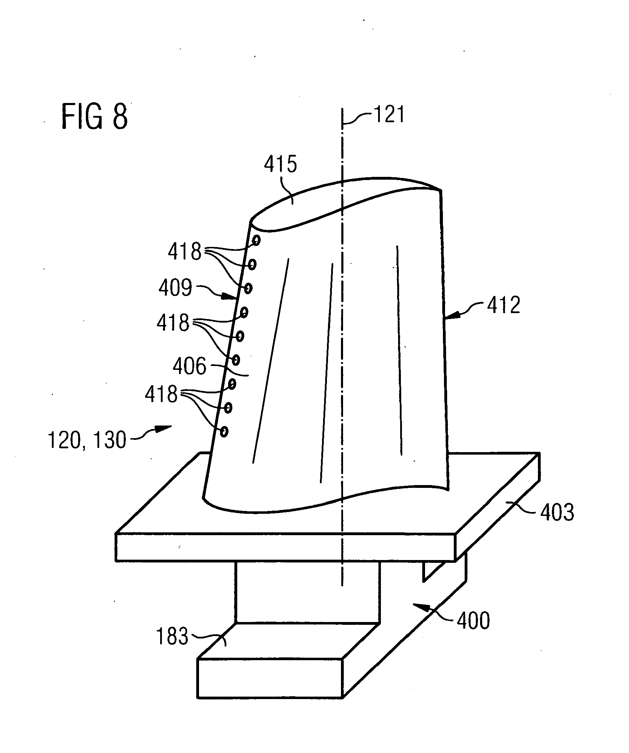

Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkriställine Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

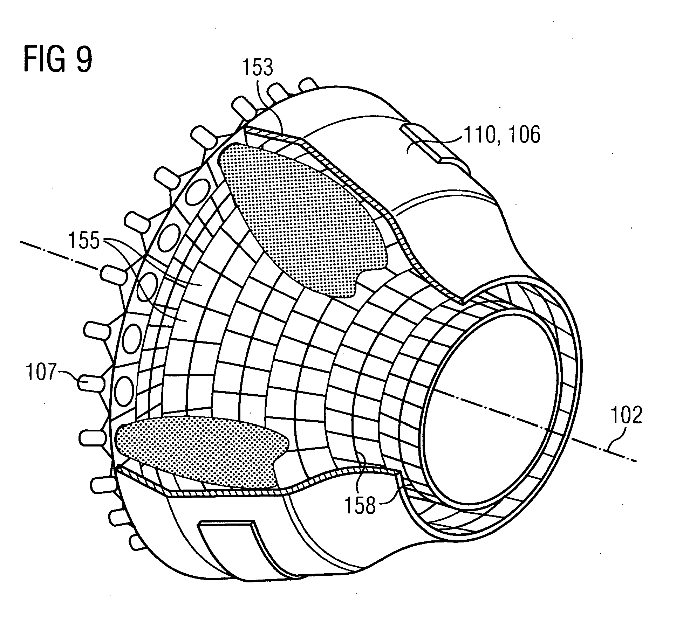

Die Figur 9 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Düsenanordnung zum Kaltgasspritzen mit einer ersten Düse (1, 3, 5) und einer zweiten Düse (2, 4, 6),
welche innerhalb der ersten Düse angeordnet ist,
wobei die in der ersten Düse (1, 3, 5) angeordnete zweite Düse (2, 4, 6) einen konvergenten und einen divergenten Abschnitt aufweist.

2. Düsenanordnung nach Anspruch 1,
**dadurch gekennzeichnet, dass**
die zweite Düse (2, 4, 6) zentrisch in der ersten Düse(1, 3, 5) angeordnet ist.

3. Düsenanordnung nach Anspruch 1 oder 2,
**dadurch gekennzeichnet, dass**
die erste Düse (1, 3, 5) eine zylinderförmige Düse ist.

4. Düsenanordnung nach einem der Ansprüche 1 bis 3,
**dadurch gekennzeichnet, dass**
die in der ersten Düse (1, 3, 5)angeordnete zweite Düse (2, 4, 6) eine Lavaldüse ist.

5. Düsenanordnung nach einem der Ansprüche 1 bis 3,
**dadurch gekennzeichnet, dass**
die erste Düse (1, 3, 5) einen konstanten Innendurchmesser aufweist.

6. Düsenanordnung nach einem der Ansprüche 1 bis 3,
**dadurch gekennzeichnet, dass**
die erste Düse (1, 3, 5) einen variierenden Innendurchmesser aufweist.

7. Düsenanordnung nach einem der Ansprüche 1 bis 6,
**dadurch gekennzeichnet, dass**
die in der ersten Düse (1, 3, 5)' angeordnete zweite Düse (2, 4, 6) einen Querschnitt mit einer rechtwinkeligen, parallelepipeden, elliptischen oder einen kreisförmigen Form aufweist.

8. Düsenanordnung nach einem der Ansprüche 1 bis 7,
**dadurch gekennzeichnet, dass**
der Innenquerschnitt der zweiten Düse (2, 4, 6) die gleiche Form aufweist wie der Außenquerschnitt der zweiten Düse (2, 4, 6).

9. Düsenanordnung nach einem der Ansprüche 1 bis 7,
**dadurch gekennzeichnet, dass**
der Innenquerschnitt der zweiten Düse (2, 4, 6) eine zu dem Außenquerschnitt der zweiten Düse (2, 4, 6) verschiedene Form aufweist.

10. Düsenanordnung nach einem der Ansprüche 1 bis 9,
**dadurch gekennzeichnet, dass**
die Gesamtlänge der ersten Düse (1, 3, 5) gleich ist zu der Gesamtlänge der zweiten Düse (2, 4, 6).

11. Düsenanordnung nach einem der Ansprüche 1 bis 9,
**dadurch gekennzeichnet, dass**
die Gesamtlänge der ersten Düse (1, 3, 5) kleiner ist als die Gesamtlänge der zweiten Düse (2, 4, 6).

12. Düsenanordnung nach einem der Ansprüche 1 bits 9,
**dadurch gekennzeichnet, dass**
die Gesamtlänge der ersten Düse (1, 3, 5) größer ist als die Gesamtlänge der zweiten Düse (2, 4, 6).

13. Düsenanordnung nach einem der Ansprüche 1 bis 12,
**dadurch gekennzeichnet, dass**
die erste Düse (1, 3, 5) und die zweite Düse (2, 4, 6) aus einer Keramik, einem Kunststoff, einem Metall oder einer Metalllegierung bestehen, die alle jeweils optional beschichtet sind.

14. Verfahren zur Beschichtung eines Substrats mittels Kaltgasspritzen,
bei dem ein Gas einer ersten Düse (1, 3, 5) zugeführt wird und ein Partikel enthaltendes Gas einer in der ersten Düse (1, 3, 5) angeordneten zweiten Düse (2, 4, 6) zugeführt wird,
wobei die in der ersten Düse (1, 3, 5) angeordnete zweite Düse (2, 4, 6) einen konvergenten und einen divergenten Abschnitt aufweist und
die Partikel auf eine Oberfläche des Substrats mittels der Gase aufgebracht werden.

15. Verfahren nach Anspruch 14,
**dadurch gekennzeichnet, dass**
das Gas, das der ersten Düse (1, 3, 5) zugeführt wird, ebenfalls Partikel enthält.

16. Verfahren nach Anspruch 15,
**dadurch gekennzeichnet, dass**
die Partikel des Gases, das der zweiten Düse (2, 4, 6) zugeführt wird, von den Partikeln, die in dem Gas enthalten sind, das der ersten Düse (1, 3, 5) zugeführt wird, in Art und Größe verschiedene Partikel sind.

17. Verfahren nach einem der Ansprüche 14 bis 16,
**dadurch gekennzeichnet, dass**
die Partikel, die in dem Gas enthalten sind, das der zweiten Düse (2, 4, 6) zugeführt wird, eine Partikelgröße < 5 µm, insbesondere < 1 µm, aufweisen.

18. Verfahren nach einem der Ansprüche 14 bis 17,
**dadurch gekennzeichnet, dass**
das Gas, das der ersten Düse (1, 3, 5) zugeführt wird, ausgewählt ist aus der Gruppe, bestehend aus Stickstoff, Helium, Argon, Luft, Neon, Krypton, Xenon, Sauerstoff, Kohlendioxid und deren Gemische, und das Gas, das der zweiten Düse (2, 4, 6) zugeführt wird, ausgewählt ist aus der Gruppe, bestehend aus Stickstoff, Helium, Argon, Luft, Neon, Krypton, Xenon, Sauerstoff, Kohlendioxid und deren Gemische.

19. Verfahren nach einem der Ansprüche 14 bis 18,
**dadurch gekennzeichnet, dass**
das Gas, das der ersten Düse (1, 3, 5) zugeführt wird, und das Gas, das der zweiten Düse (2, 4, 6) zugeführt wird, verschieden sind.

20. Verfahren nach einem der Ansprüche 14 bis 19,
**dadurch gekennzeichnet, dass**
das Gas, das der ersten Düse (1, 3, 5) zugeführt wird, Partikel mit einer Partikelgröße zwischen 5 und 50 µm enthält, und dass das Gas, das der zweiten Düse (2, 4, 6) zugeführt wird, Partikel mit einer Partikelgröße < 5 µm, bevorzugt < 1 µm, enthält.

21. Verfahren nach einem der Ansprüche 14 bis 20,
**dadurch gekennzeichnet, dass**
eine Düsenanordnung nach einem der Ansprüche 1 bis 14 zur Anwendung kommt.

22. Beschichtung,
**dadurch gekennzeichnet, dass**
sie unter Verwendung einer Düsenanordnung nach einem der Ansprüche 1 bis 13 und einem Verfahren nach einem der Ansprüche 14 bis 21 hergestellt ist.

23. Beschichtung nach Anspruch 22,
**dadurch gekennzeichnet, dass**
sie Partikel mit Partikelgrößen < 5 µm aufweist.

## Claims

1. Nozzle arrangement for cold gas spraying, having a first nozzle (1, 3, 5) and a second nozzle (2, 4, 6) which is arranged inside the first nozzle,
wherein the second nozzle (2, 4, 6) arranged in the first nozzle (1, 3, 5) comprises a converging section and a diverging section.

2. Nozzle arrangement according to Claim 1,
**characterized in that**
the second nozzle (2, 4, 6) is arranged centrally in the first nozzle (1, 3, 5).

3. Nozzle arrangement according to Claim 1 or 2,
**characterized in that**
the first nozzle (1, 3, 5) is a cylindrical nozzle.

4. Nozzle arrangement according to one of Claims 1 to 3,
**characterized in that**
the second nozzle (2, 4, 6) arranged in the first nozzle (1, 3, 5) is a Laval nozzle.

5. Nozzle arrangement according to one of Claims 1 to 3,
**characterized in that**
the first nozzle (1, 3, 5) has a constant internal diameter.

6. Nozzle arrangement according to one of Claims 1 to 3,
**characterized in that**
the first nozzle (1, 3, 5) has a varying internal diameter.

7. Nozzle arrangement according to one of Claims 1 to 6,
**characterized in that**
the second nozzle (2, 4, 6) arranged in the first nozzle (1, 3, 5) has a cross section with a rectangular, parallelepipedal, elliptical or circular shape.

8. Nozzle arrangement according to one of Claims 1 to 7,
**characterized in that**
the internal cross section of the second nozzle (2, 4, 6) has the same shape as the external cross section of the second nozzle (2, 4, 6).

9. Nozzle arrangement according to one of Claims 1 to 7,
**characterized in that**
the internal cross section of the second nozzle (2, 4, 6) has a different shape to the external cross section of the second nozzle (2, 4, 6).

10. Nozzle arrangement according to one of Claims 1 to 9,
**characterized in that**
the overall length of the first nozzle (1, 3, 5) is equal to the overall length of the second nozzle (2, 4, 6).

11. Nozzle arrangement according to one of Claims 1 to 9,
**characterized in that**
the overall length of the first nozzle (1, 3, 5) is less than the overall length of the second nozzle (2, 4, 6).

12. Nozzle arrangement according to one of Claims 1 to 9,
**characterized in that**
the overall length of the first nozzle (1, 3, 5) is greater than the overall length of the second nozzle (2, 4, 6).

13. Nozzle arrangement according to one of Claims 1 to 12,
**characterized in that**
the first nozzle (1, 3, 5) and the second nozzle (2, 4, 6) consist of a ceramic, a plastic, a metal or a metal alloy, all of which are optionally coated.

14. Method for coating a substrate by means of cold gas spraying,
wherein a gas is delivered to a first nozzle (1, 3, 5) and a gas containing particles is delivered to a second nozzle (2, 4, 6) arranged in the first nozzle (1, 3, 5),
wherein the second nozzle (2, 4, 6) arranged in the first nozzle (1, 3, 5) comprises a converging section and a diverging section, and
the particles are applied onto the surface of the substrate by means of the gases.

15. Method according to Claim 14,
**characterized in that**
the gas which is delivered to the first nozzle (1, 3, 5) also contains particles.

16. Method according to Claim 15,
**characterized in that**
the particles of the gas which is delivered to the second nozzle (2, 4, 6) are particles differing in type and size to the particles that are contained in the gas which is delivered to the first nozzle (1, 3, 5).

17. Method according to one of Claims 14 to 16,
**characterized in that**
the particles that are contained in the gas which is delivered to the second nozzle (2, 4, 6) have a particle size < 5 µm, in particular < 1 µm.

18. Method according to one of Claims 14 to 17,
**characterized in that**
the gas which is delivered to the first nozzle (1, 3, 5) is selected from the group consisting of nitrogen, helium, argon, air, neon, krypton, xenon, oxygen, carbon dioxide and mixtures thereof, and the gas which is delivered the second nozzle (2, 4, 6) is selected from the group consisting of nitrogen, helium, argon, air, neon, krypton, xenon, oxygen, carbon dioxide and mixtures thereof.

19. Method according to one of Claims 14 to 18,
**characterized in that**
the gas which is delivered to the first nozzle (1, 3, 5) and the gas which is delivered the second nozzle (2, 4, 6) are different.

20. Method according to one of Claims 14 to 19,
**characterized in that**
the gas which is delivered to the first nozzle (1, 3, 5) contains particles with a particle size of between 5 and 50 µm, and **in that** the gas which is delivered to the second nozzle (2, 4, 6) contains particles with a particle size < 5 µm, preferably < 1 µm.

21. Method according to one of Claims 14 to 20,
**characterized in that**
a nozzle arrangement according to one of Claims 1 to 14 is employed

22. Coating,
**characterized in that**
it is produced by using a nozzle arrangement according to one of Claims 1 to 13 and a method according to one of Claims 14 to 21.

23. Coating according to Claim 22,
**characterized in that**
it comprises particles with particle sizes < 5 µm.

## Revendications

1. Agencement de buses pour la projection par gaz froid, comprenant une première buse (1, 3, 5) et une deuxième buse (2, 4, 6),
laquelle est montée dans la première buse,
la deuxième buse ( 2, 4, 6) montée dans la première buse (1, 3, 5) ayant un tronçon convergent et un tronçon divergent.

2. Agencement de buses suivant la revendication 1,
**caractérisé en ce que**
la deuxième buse (2, 4, 6) est montée de manière centrée dans la première buse (1, 3, 5).

3. Agencement de buses suivant la revendication 1 ou 2,
**caractérisé en ce que**
la première buse (1, 3, 5) est une buse en forme de cylindre.

4. Agencement de buses suivant l'une des revendications 1 à 3,
**caractérisé en ce que**
la deuxième buse ( 2, 4, 6) montée dans la première buse ( 1, 3, 5) est une buse Laval.

5. Agencement de buses suivant l'une des revendications 1 à 3,
**caractérisé en ce que**
la première buse ( 1, 3, 5) a un diamètre intérieur constant.

6. Agencement de buses suivant l'une des revendications 1 à 3,
**caractérisé en ce que**
la première buse ( 1, 3, 5) a un diamètre intérieur variable.

7. Agencement de buses suivant l'une des revendications 1 à 6,
**caractérisé en ce que**
la deuxième buse ( 2, 4, 6) montée dans la première buse ( 1, 3, 5) a une section transversale de forme rectangulaire, parallélépipédique, elliptique ou circulaire.

8. Agencement de buses suivant l'une des revendications 1 à 7,
**caractérisé en ce que**
la section transversale intérieure de la deuxième buse ( 2, 4, 6) a la même forme que la section transversale extérieure de la deuxième buse ( 2, 4, 6).

9. Agencement de buses suivant l'une des revendications 1 à 7,
**caractérisé en ce que**
la section transversale intérieure de la deuxième buse (2, 4, 6) a une forme différente de la section transversale extérieure de la deuxième buse ( 2, 4, 6 ).

10. Agencement de buses suivant l'une des revendications 1 à 9,
**caractérisé en ce que**
la longueur totale de la première buse ( 1, 3, 5) est égale à la longueur totale de la deuxième buse ( 2, 4, 6 ).

11. Agencement de buses suivant l'une des revendications 1 à 9,
**caractérisé en ce que**
la longueur totale de la première buse ( 1, 3, 5 ) est plus petite que la longueur totale de la deuxième buse ( 2, 4, 6 ).

12. Agencement de buses suivant l'une des revendications 1 à 9,
**caractérisé en ce que**
la longueur totale de la première buse ( 1, 3, 5 ) est plus grande que la longueur totale de la deuxième buse ( 2, 4, 6 ).

13. Agencement de buses suivant l'une des revendications 1 à 12,
**caractérisé en ce que**
la première buse ( 1, 3, 5) et la deuxième buse ( 2, 4, 6 ) sont en céramique, en une matière plastique, en un métal ou en un alliage métallique, qui sont tous revêtus respectivement facultativement.

14. Procédé de revêtement d'un substrat au moyen d'une projection par gaz froid,
dans lequel on envoie un gaz à une première buse (1, 3, 5) et on envoie un gaz contenant des particules à une deuxième buse ( 2, 4, 6 ) montée dans la première buse ( 1, 3, 5),
dans lequel la deuxième buse (2, 4, 6 ) montée dans la première buse (1, 3, 5) a un tronçon convergent et un tronçon divergent et
on dépose les particules sur une surface du substrat au moyen du gaz.

15. Procédé suivant la revendication 14,
**caractérisé en ce que**
le gaz, qui est envoyé à la première buse (1, 3, 5) contient également des particules.

16. Procédé suivant la revendication 15,
**caractérisé en ce que**
ce que les particules du gaz, qui est envoyé à la deuxième buse (2, 4, 6), sont des particules d'une nature et d'une dimension différentes des particules qui sont contenues dans le gaz, qui est envoyé à la première buse ( 1, 3, 5).

17. Procédé suivant l'une des revendications 14 à 16,
**caractérisé en ce que**
les particules qui sont contenues dans le gaz, qui est envoyé à la deuxième buse (2, 4, 6), ont une granulométrie < 5 µm, notamment < 1 µm.

18. Procédé suivant l'une des revendications 14 à 17,
**caractérisé en ce que**
le gaz, qui est envoyé à la première buse (1, 3, 5), est choisi dans le groupe constitué de l'azote, de l'hélium, de l'argon, de l'air, du néon, du krypton, du xénon, de l'oxygène, du dioxyde de carbone et de leurs mélanges et le gaz, qui est envoyé à la deuxième buse (2, 4, 6), est choisi dans le groupe constitué de l'azote, de l'hélium, de l'argon, de l'air, du néon, du krypton, du xénon, de l'oxygène, du dioxyde de carbone et de leurs mélanges.

19. Procédé suivant l'une des revendications 14 à 18,
**caractérisé en ce que**
le gaz qui est envoyé à la première buse ( 1, 3, 5) et le gaz qui est envoyé à la deuxième buse ( 2, 4, 6 ) sont différents.

20. Procédé suivant l'une des revendications 14 à 19,
**caractérisé en ce que**
le gaz qui est envoyé à la première buse (1, 3, 5) contient des particules d'une granulométrie comprise entre 5 et 50 µm et **en ce que** le gaz qui est envoyé à la deuxième buse ( 2, 4, 6) contient des particules d'une granulométrie < 5 µm, de préférence < 1 µm.

21. Procédé suivant l'une des revendications 14 à 20,
**caractérisé en ce que**
l'on utilise un agencement de buses suivant l'une des revendications 1 à 14.

22. Revêtement
**caractérisé en ce que**
il est produit en utilisant un agencement de buses suivant l'une des revendications 1 à 13 et un procédé suivant l'une des revendications 14 à 21.

23. Revêtement suivant la revendication 22
**caractérisé en ce que**
il a des particules de granulométries < 5 µm.
